# EUROPÄISCHE PATENTANMELDUNG

(11) **EP 2 082 808 A2**
(43) Veröffentlichungstag der Anmeldung: **29.07.2009**
(21) Anmeldenummer: 09000476.3
(22) Anmeldetag: 15.01.2009
(51) Int. Cl.: B04C 3/00, B04C 3/06, B01D 45/16, B01D 53/26

(54) **Zentrifugalabscheider**

(30) Priorität: 22.01.2008 DE 102008005574
(71) Anmelder: Areva NP GmbH, 91052 Erlangen (DE)
(72) Erfinder: Kolev, Nikolay, Dr., 91074 Herzogenaurach (DE); Heller, Max, 91080 Uttenreuth (DE); Wedekind, Stefan, 90762 Fürth (DE)
(74) Vertreter: Walkenhorst, Andreas

(57) **Zusammenfassung**

Ein Zentrifugalabscheider (2) zur Abscheidung von Flüssigkeit aus einem mit Flüssigkeit oder Dampf beladenen Gasstrom mit einem von einem feststehenden Innengehäuse (16) begrenzten, entlang einer Axialrichtung (18) ausgerichteten Strömungskanal (14) soll bei hoher Abscheideeffizienz ein besonders ruhiges und vibrationsarmes Betriebsverhalten besitzen. Dazu umfasst der Zentrifugalabscheider (2) erfindungsgemäß eine Mehrzahl von im Bereich einer Abscheidestrecke (8) in Axialrichtung (18) hintereinander liegenden, jeweils ringförmig um das Innengehäuse (16) herum angeordneten und jeweils durch Trennwände (36) gegeneinander abgedichteten Flüssigkeitssammelkammern (38), wobei die jeweilige Flüssigkeitssammelkammer (38) über eine Vielzahl von in das Innengehäuse (16) eingebrachten Durchtrittsöffnungen (26) mit dem Strömungskanal (14) in strömungstechnischer Verbindung steht.

## Beschreibung

Die Erfindung betrifft einen Zentrifugalabscheider zur Abscheidung von Flüssigkeit aus einem mit Flüssigkeit oder Dampf beladenen Gasstrom mit einem von einem feststehenden Innengehäuse begrenzten, entlang einer Axialrichtung ausgerichteten Strömungskanal.

Zentrifugalabscheider, die auch als Zyklonabscheider bezeichnet werden, dienen unter anderem zur Absonderung von in Gasen enthaltenen festen oder flüssigen Partikeln, insbesondere zur Abscheidung von Wassertropfen aus einem Wasser-Dampf-Gemisch. Ein mit Flüssigkeit oder feuchtem Dampf beladener Gasstrom wird dazu innerhalb eines Strömungskanals in eine Rotationsbewegung versetzt. Aufgrund der wirkenden Zentrifugalkräfte und der im Verhältnis zu den Gasteilchen größeren Massenträgheit der flüssigen Partikel reichern sich letztere im äußeren Randbereich des Strömungskanals an dessen begrenzender Wand an, wo sie gesammelt und abgeführt werden, während der so entfeuchtete Gasstrom selber den Strömungskanal über dessen Zentralbereich verlässt.

Bei einem Zentrifugalabscheider bekannter Bauart ist ein von einem Innengehäuse zylindrischer umgebener Strömungskanal mit einem ringförmigen Schlitz in der Gehäusewand vorgesehen. Die abgetrennte Flüssigkeit wird in einem über den Schlitz mit dem Strömungskanal verbundenen, vergleichsweise großvolumigen Auffangbehälter gesammelt und aus diesem über eine Entnahmeleitung abgepumpt. Als nachteilig bei einer derartigen Bauweise des Zentrifugalabscheiders hat sich das relativ unruhige Betriebsverhalten herausgestellt, das zumindest in einigen Betriebsbereichen mit starken Erschütterungen und Vibrationen verbunden ist. Neben einer relativ großen mechanischen Belastung von Bauteilen und Verbindungselementen wird vor allem auch die starke Schallentwicklung während des Betriebs als störend empfunden. Überdies erscheinen der Wirkungsgrad der Flüssigkeitsabscheidung im Verhältnis zur eingesetzten Energie sowie die absolute Entfeuchtungswirkung verbesserungswürdig.

Aufgabe der vorliegenden Erfindung ist es daher, einen Zentrifugalabscheider anzugeben, der sich bei hohem Wirkungsgrad und hoher Abscheideleistung durch ein besonders ruhiges Betriebsverhalten auszeichnet.

Diese Aufgabe wird erfindungsgemäß gelöst, indem der Zentrifugalabscheider eine Mehrzahl von im Bereich einer Abscheidestrecke in Axialrichtung hintereinander liegenden, jeweils ringförmig um das Innengehäuse herum angeordneten und jeweils durch Trennwände gegeneinander abgedichteten Flüssigkeitssammelkammern aufweist, wobei die jeweilige Flüssigkeitssammelkammer über eine Vielzahl von in das Innengehäuse eingebrachten Durchtrittsöffnungen mit dem Strömungskanal in strömungstechnischer Verbindung steht.

Die Erfindung geht von der im Rahmen von numerischen Strömungssimulationen (CFD = computational fluid dynamics) überraschend gewonnenen Erkenntnis aus, dass das unruhige Betriebsverhalten bisheriger Zentrifugalabscheider vor allem auf die resonanzartige Anregung und Propagation von Druckwellen innerhalb des einzigen, vergleichsweise großvolumigen Flüssigkeitssammelbehälters zurückzuführen ist, welche wiederum in den Strömungskanal zurückwirken und dort unerwünschte sekundäre Wirbel (neben der an sich gewünschten primären Drallströmung) hervorrufen. Dabei spielt auch die bisherige Geometrie der in der Art eines umlaufenden Ringschlitzes ausgeführten Durchtrittsöffnung zum Sammelbehälter in der Wand des Strömungskanals eine ungünstige Rolle, die die Ausbildung von unerwünschten Reflektionswellen begünstigt.

Zur Vermeidung derartiger Effekte wird nunmehr vorgeschlagen, eine Mehrzahl von ringförmig um den Strömungskanal herum angeordneten, vergleichsweise kleinvolumigen Flüssigkeitssammelkammern vorzusehen, die in Axialrichtung gesehen jeweils hintereinander liegen und voneinander durch ringförmige Trennwände oder Trennbleche abgetrennt und somit strömungstechnisch separiert sind.

Anstatt wie bislang über einen einzigen umlaufenden Schlitz im Innengehäuse ist jede der Flüssigkeitssammelkammern nunmehr über eine Vielzahl von sowohl um den Umfang des Strömungskanals herum als auch in Axialrichtung verteilt angeordneten Durchtrittsöffnungen mit jeweils vergleichsweise geringem Querschnitt mit dem Strömungskanal verbunden.

Wie im Rahmen von CFD-Untersuchungen bestätigt wurde, kann mit einer derartigen Konstruktion die Ausbildung und Propagation von pulsierenden Druckwellen und die Bildung von sekundären Wirbelwalzen ausgesprochen effektiv unterdrückt werden. Zudem treten im Strömungskanal geringere Staudrücke als bislang auf, was die Flüssigkeitsabscheidung an der Gehäusewand und den Übertritt durch die Durchtrittsöffnungen hindurch in die jeweilige Flüssigkeitssammelkammer erleichtert. Das Eindringen von Flüssigkeitstropfen in die Grenzschicht des auf der Wand des Innengehäuses gebildeten Flüssigkeitsfilms ist ebenfalls erleichtert. Damit ist eine effektive Abscheidung auch vergleichsweise kleiner Flüssigkeitstropfen ermöglicht. Durch die konsequente Unterdrückung von sekundären Wirbeln im Strömungskanal wird außerdem vermieden, dass in der jeweiligen Flüssigkeitssammelkammer gesammelte Flüssigkeit wieder in Strömungskanal hineingesogen oder gewirbelt wird. Überdies ist durch die siebähnliche Perforation des den Strömungskanal begrenzenden Innengehäuses die für die Phasenseperation wirksame Oberfläche vergrößert, was ebenfalls zur effektiven Flüssigkeitsabscheidung beiträgt.

Für eine gleichmäßige und - räumlich gesehen - quasi kontinuierliche Flüssigkeitsabscheidung sind die der jeweiligen Flüssigkeitssammelkammer zugeordneten Durchtrittsöffnungen auf der vom Innengehäuse gebildeten Mantelfläche des Strömungskanals zumindest annähernd gleichmäßig verteilt. Dabei könnte die räumliche "Dichte" der Durchtrittsöffnungen beispielsweise von Kammer zu Kammer leicht variieren, um so eine besonders vorteilhafte Anpassung an die lokalen Strömungsverhältnisse im jeweiligen Abschnitt des Strömungskanals zu erreichen. Für eine vereinfachte Herstellung des Zentrifugalabscheiders sind die Durchtrittsöffnungen jedoch vorteilhafterweise über die gesamte Abscheidestrecke hinweg zumindest annähernd gleichmäßig über die Mantelfläche des Strömungskanals angeordnet. Sie bilden also, wenn man die Mantelfläche in Gedanken abwickelt, ein annähernd regelmäßiges zweidimensionales Muster oder Gitter.

Numerische Untersuchungen haben gezeigt, dass es besonders vorteilhaft ist, wenn das Verhältnis der gesamten Querschnittsfläche aller Durchtrittsöffnungen zur Mantelfläche des Strömungskanals im Bereich der Abscheidestrecke 5% bis 15%, vorzugsweise 10%, beträgt.

In einer vorteilhaften Weiterbildung ist das Innengehäuse des Zentrifugalabscheiders derart ausgebildet, dass sich der Strömungskanal in Hauptströmungsrichtung des Gasstroms gesehen, also in Axialrichtung von der Eintrittsseite zur Austrittsseite hin, verengt, insbesondere konisch verengt. Durch eine derartige Reduktion des Durchmessers in der Hauptströmungsrichtung wird der unvermeidliche Effekt einer turbulenten Dissipation der Gasströmung und damit die bei zylindrischer Ausgestaltung des Strömungskanals mit konstantem Durchmesser bedingte Abnahme der Wirbel- bzw. Drallstärke kompensiert. Bei geeigneter Wahl des Neigungswinkels des von der Gehäusewand gebildeten Kegelmantels gegenüber der Axialrichtung kann somit erreicht werden, dass die tangentiale (d. h. in Umfangsrichtung orientierte) Geschwindigkeitskomponente der Drallströmung trotz der unvermeidlichen Dissipationsverluste in ihrem äußeren Randbereich über die gesamte Abscheidestrecke hinweg näherungsweise konstant bleibt oder sogar zur Austrittsseite hin ansteigt. Daher bleibt bei geeigneter Wahl des Neigungswinkels auch die für die Gas- Flüssigkeits-Separation wirksame Zentrifugalkraft über die gesamte Abscheidestrecke hinweg näherungsweise konstant.

In vorteilhafter Ausgestaltung ist die jeweilige Flüssigkeitssammelkammer als in Umfangsrichtung nicht weiter unterteilte Ringkammer ausgeführt. Die in die jeweilige Ringkammer abgeschiedene Flüssigkeitsmenge läuft dann in Folge der Schwerkraft an deren Innenwänden herunter und sammelt sich in einem als Auffangbecken wirksamen unteren Bereich, so dass nur eine einzige Entnahmeleitung je Kammer, vorzugsweise angeschlossen an deren tiefsten Punkt, notwendig ist, um die angesammelte Flüssigkeit abzuleiten.

An ihrem vom Zentrifugalabscheider abgewandten Ende, ist die jeweilige Flüssigkeitsentnahmeleitung vorteilhafterweise über einen U-förmigen oder S-förmigen Siphonbogen an eine gemeinsame Sammelleitung oder an einen sonstigen externen Sammelbehälter angeschlossen. Sobald sich in dem Siphonbogen ein Flüssigkeitspfropfen gebildet hat, ist damit sicher gestellt, dass die jeweilige Flüssigkeitssammelkammer des Zentrifugalabscheiders gasdicht gegenüber der äußeren Umgebung verschlossen ist. Der Gasdruck innerhalb der Flüssigkeitssammelkammer stimmt somit im Wesentlichen mit dem Staudruck im zugehörigen Abschnitt des über die Durchtrittsöffnungen verbundenen Strömungskanals überein und wird durch die Flüssigkeitsentnahme nicht beeinflusst. Dabei ist insbesondere verhindert, dass sich Druckfluktuationen innerhalb einer Kammer über das System der Entnahmeleitungen in die anderen Kammern ausbreiten.

In weiterer vorteilhafter Ausgestaltung umfasst der Strömungskanal des Zentrifugalabscheiders einen der Abscheidestrecke in Strömungsrichtung vorgelagerten Eintrittsbereich und einen der Abscheidestrecke nachgelagerten Austrittsbereich, wobei im Eintrittsbereich ein Kranz von drallerzeugenden Leitblechen und im Austrittbereich ein Kranz von drallvernichtenden Leitblechen angeordnet ist. Die eingangs- und/oder ausgangsseitigen Leitbleche oder Leitschaufeln können vorteilhafterweise in ihrem Anstellwinkel verstellbar sein. Durch den sogenannten "Entdraller" im Austrittsbereich wird im Drallanteil der Drallströmung enthaltene kinetische Energie wieder in Druck umgewandelt und so ein innerhalb der Abscheidestrecke erlittener Druckverlust zumindest teilweise kompensiert.

Die mit der Erfindung erzielten Vorteile bestehen insbesondere darin, dass durch eine räumlich quasi-kontinuierliche Tropfenabscheidung am Umfang eines einen Strömungskanal begrenzenden Innengehäuses und durch eine Unterteilung eines umliegenden Sammelraumes in eine Mehrzahl von axial hintereinander angeordneten und voneinander gasdicht abgetrennten Flüssigkeitssammelkammern, insbesondere in Kombination mit einem sich konisch verengenden Strömungskanal und mit gasdichtem Flüssigkeitsentnahmeleitungen für die einzelnen Flüssigkeitssammelkammern, ein Zentrifugalabscheider mit besonders ruhigem und vibrationsarmen Betriebsverhalten bei zu gleich hoher Abscheideeffizienz realisierbar ist. Der derart optimierte Zentrifugalabscheider eignet sich insbesondere als Groboder Vorabscheider, z.B. zur Entlastung eines strömungsseitig nachgeschalteten weiteren Wasserabscheiders in einem Dampfturbinenkreislauf, z.B. zwischen einer Hoch- und einer Niederdruckturbinenstufe.

Ein Ausführungsbeispiel der Erfindung wird anhand einer Zeichnung näher erläutert. Darin zeigen:
- Fig. 1: einen Zentrifugalabscheider im Längsschnitt, und
- Fig. 2: eine Draufsicht auf den Zentrifugalabscheider gemäß Fig. 1 in der mit dem Pfeil II bezeichneten Blickrichtung.

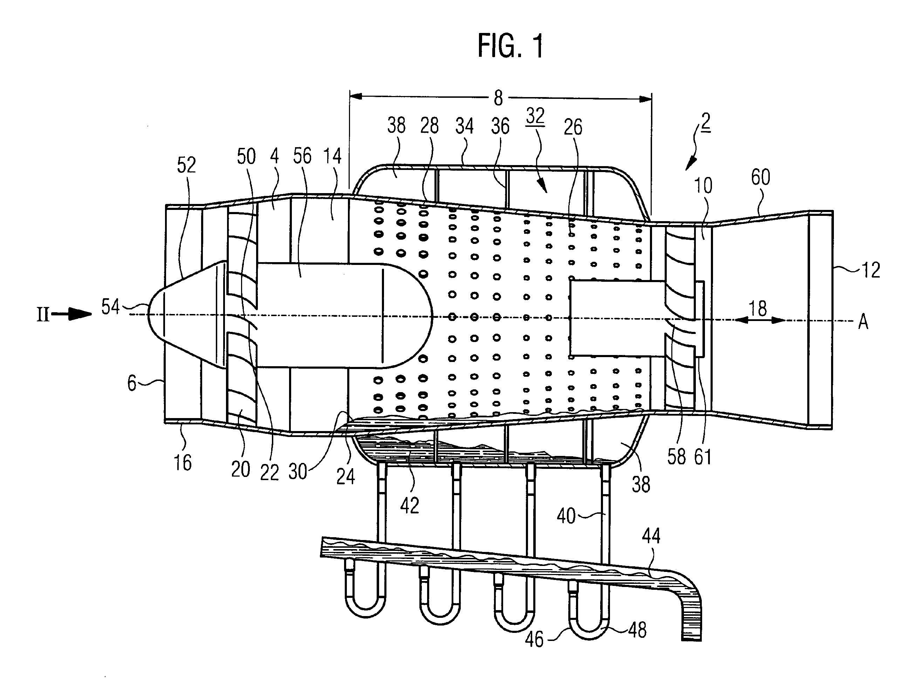

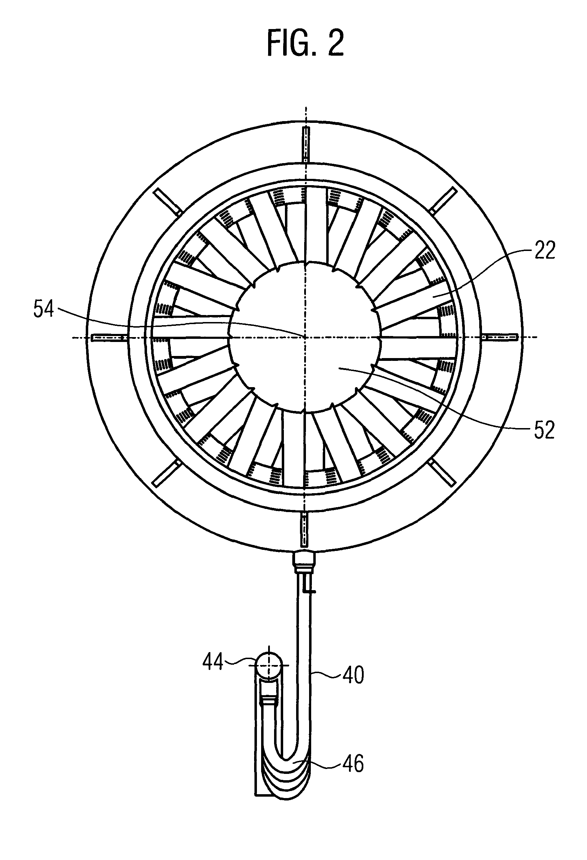

Der in Fig. 1 und Fig. 2 dargestellte Zentrifugalabscheider 2 dient zur Vor- oder Grobabscheidung von Wassertropfen aus einem Strom von feuchtem Dampf im Wasser-Dampf-Kreislauf einer Kraftwerksanlage, insbesondere in den Überströmleitungen von einer Hochdruckturbine zu den einer Niederdruckturbine vorgeschalteten Zwischenüberhitzer-Leitungen (hier nicht dargestellt). Zwischen den Zentrifugalabscheider 2 und die Zwischenüberhitzer-Leitungen kann dabei ein Wasserabscheider geschaltet sein, der durch den Zentrifugalabscheider 2 entlastet wird.

Der Zentrifugalabscheider 2 umfasst einen Eintrittsbereich 4 mit einer Eintrittsöffnung 6 für den zu entfeuchtenden Gas- oder Dampfstrom, eine Abscheidestrecke 8, innerhalb derer die Flüssigkeitsabscheidung erfolgt, und einen Austrittsbereich 10 mit einer Austrittsöffnung 12. Zwischen der Eintrittsöffnung 6 und der Austrittsöffnung 12 wird der Gas- oder Dampfstrom in einem Strömungskanal 14 geführt, der nach außen durch ein geeignet konturiertes Innengehäuse 16 begrenzt ist. Der Strömungskanal 14 ist entlang einer Achse A in Axialrichtung 18 ausgerichtet; die Axialrichtung 18 definiert zugleich die Richtung, entlang derer der Gas- oder Dampfstrom in den Eintrittsbereich 4 eintritt. Abgesehen von den noch im Einzelnen zu beschreibenden Flüssigkeitsentnahmeleitungen ist der gesamte Zentrifugalabscheider 2 im Wesentlichen radialsymmetrisch mit der Symmetrieachse A aufgebaut (vgl. Fig. 2).

Im Eintrittsbereich 4 ist ein Drallerzeuger 20 mit einer Mehrzahl von in der Art eines Schaufelkranzes von Turbinenleitschaufeln sich von der Achse A radial nach außen erstreckenden, feststehenden profilierten Leitblechen 22 oder Leitschaufeln angeordnet. Im Eintrittsstutzen des Zentrifugalabscheiders 2 wird der axial einströmende Dampf durch die Leitbleche 22 in eine Drallbewegung versetzt. Aufgrund der entstehenden Zentrifugalkraft und der im Verhältnis zu den Gasmolekülen wesentlich größeren Masse der Flüssigkeitstropfen, einhergehend mit einer größeren Trägheit, werden letztere im Bereich der Abscheidestrecke 8 nach außen an die Wand des Innengehäuses 16 geschleudert, wo sie sich als Flüssigkeitsfilm 24 niederschlagen, und werden schließlich über entsprechende Durchtrittsöffnungen 26 im Innengehäuse 16 und einen umliegenden Auffangbehälter nach außen abgeführt. Auf diese Weise enthält der aus der Austrittsöffnung 12 austretende Gas- oder Dampfstrom eine geringere Feuchte als der in die Eintrittsöffnung 6 eintretende.

Der Zentrifugalabscheider 2 ist bei einfach gehaltener Bauweise für einen vergleichsweise hohen Abscheidegrad des im Gas- oder Dampfstrom enthaltenen Flüssigkeitsanteils ausgelegt, wobei zugleich ein besonders ruhiges und vibrationsarmes Betriebsverhalten ermöglicht ist. Dazu sind über die komplette Ausdehnung der Abscheidestrecke 8 hinweg und über den kompletten Umfang des Strömungskanals 14 Durchtrittsöffnungen 26 von vergleichsweise kleinem Durchmesser von z.B. 5 mm bis 10 mm in die den Strömungskanal 14 umgebende Mantelfläche 28, d.h. in die Wand des Innengehäuses 16 eingebracht. Die Anordnung ist dabei derart regelmäßig gewählt, dass der Abstand zwischen zwei benachbarten Durchtrittsöffnungen 26, bezogen auf deren jeweiligen Mittelpunkt, etwa 6 mm bis 20 mm beträgt. Insgesamt beträgt das Verhältnis der gesamten Querschnittsfläche aller Durchtrittsöffnungen 26 zur Mantelfläche im Bereich der Abscheidestrecke 8, sprich der Perforationsgrad, beispielsweise 10%. Damit ist gewährleistet, dass die im Strömungskanal 14 nach außen geschleuderten und sich vorübergehend in einem Flüssigkeitsfilm 24 (mit der Grenzschicht 30) anlagernden Flüssigkeitstropfen praktisch über die gesamte Mantelfläche 28 hinweg problemlos durch die vergleichsweise eng beieinander liegenden Durchtrittsöffnungen 26 nach außen hindurchtreten können.

Die durch die Durchtrittsöffnungen 26 den Strömungskanal 14 verlassende Flüssigkeitsmenge wird in einem um den Strömungskanal 14 herum angeordneten Ringraum 32 gesammelt. Nach innen ist der Ringraum 32 durch das Innengehäuse 16 begrenzt; die äußere Begrenzung wird durch ein im Wesentlichen zylindermantelförmiges Außengehäuse 34 gebildet, welches am Anfang und Ende der Abscheidestrecke 8 an das Innengehäuse 16 herangeführt und mit diesem gasdicht verbunden bzw. verschlossen ist. Der Ringraum 32 ist durch ringförmige Trennwände 36, die senkrecht zur Achse A ausgerichtet sind, in voneinander gas- und flüssigkeitsdicht abgetrennte Flüssigkeitssammelkammern 38 unterteilt. Im Ausführungsbeispiel sind vier derartige, jeweils als Ringkammer ausgeführte Flüssigkeitssammelkammern 38 in Axialrichtung 18 hintereinander angeordnet. Zwischen den Flüssigkeitssammelkammern 38 besteht also keine direkte strömungstechnische Verbindung, mithin auch keine Möglichkeit eines Druckausgleichs oder einer Propatation von Druckfluktuationen. Allenfalls besteht eine indirekte Strömungsverbindung über die jeweiligen Durchtrittsöffnungen 26 und über das dazwischen liegende Stück des Strömungskanals 14, die aber durch den im Strömungskanal 14 strömenden und einen relativ hohen Staudruck aufweisenden Gas- oder Dampfstrom sowie durch den sich betriebsbedingt einstellenden Flüssigkeitsfilm 24 an der Innenwand des Innengehäuses 16 praktisch blockiert ist. Damit kann die nach außen geschleuderte Flüssigkeit in die Flüssigkeitssammelkammern 38 eintreten, ohne dass darin gegebenenfalls auftretende, vergleichsweise geringfügige Druckfluktuationen sich ausbreiten und gegenseitig in der Art eines Resonanzphänomens verstärken. Dabei ist auch die Bildung von Sekundärwirbeln unterdrückt, die die in der jeweiligen Ringkammer angesammelte Flüssigkeit 42 ansonsten wieder in den Strömungskanal 14 reißen könnten.

An der tiefsten Stelle der jeweiligen Flüssigkeitssammelkammer ist eine Flüssigkeitsentnahmeleitung 40 angeschlossen, um die sich dort sammelnde Flüssigkeit 42 - vorzugsweise alleine durch die Schwerkraft und ohne den Einsatz von Pumpen, etc. - abzuführen. An ihrem zweiten Ende münden die Flüssigkeitsentnahmeleitungen 40 jeweils in eine gemeinsame Sammelleitung 44, die wiederum zu einem externen Sammelbehälter (nicht dargestellt) führt oder in geeigneter Weise an einen Flüssigkeitskreislauf angeschlossen ist. Um zu verhindern, dass sich Druckwellen innerhalb einer Flüssigkeitssammelkammer 38 über das Leitungssystem aus Flüssigkeitsentnahmeleitungen 40 und Sammelleitung 44 fortpflanzen, weist die jeweilige Flüssigkeitsentnahmeleitung 40 einen U-förmigen Siphonbogen 46 auf, der durch einen sich dort ansammelnden Flüssigkeitspfropfen 48 gasdicht verschlossen ist. Alternativ können selbstverständlich auch andere bekannte Varianten derartiger im englischsprachigen Raum auch als "Traps" bezeichneten Flüssigkeitsdichtungen zum Einsatz kommen.

Für eine weitere Steigerung der Abscheideeffizienz ist das den Strömungskanal 14 begrenzende Innengehäuse 16 im Bereich der Abscheidestrecke 8 in der Art eines sich verengenden Kegelmantels ausgeführt, wobei das Ende mit dem größeren Durchmesser auf der Eintrittsseite der Gas- oder Dampfströmung liegt und das Ende mit dem kleineren Durchmesser zur Austrittsseite orientiert ist. Durch die Querschnittsverengung des Strömungskanals 14 wird der die Flüssigkeitsabscheidung "antreibende" Drall der Strömung trotz dissipationsbedingter Verluste besonders wirkungsvoll aufrecht erhalten.

Für eine besonders effektive Strömungsführung und Drallerzeugung ist den Leitblechen 22 des Drallerzeugers 20 strömungsseitig ein im Bereich der zentralen Nabe 50 angeordneter kegelartiger Strömungskörper 52 vorgeschaltet, der eine abgerundete Spitze 54 aufweist. Stromabwärts der Leitbleche 22 ist ein weiterer, zylindrischer Strömungskörper 56 vorgesehen, der sich bis in den Bereich der Abscheidestrecke 8 hinein fortsetzt. Er wirkt als Verdränger für die Drallströmung, die damit gezwungen wird, sich in dem zwischen dem Strömungskörper 56 und dem Innengehäuse 16 liegenden ringförmigen Raumbereich auszubilden. Der in die Abscheidestrecke 8 hineinragende Auslauf des Strömungskörpers 56 ist z.B. halbkugelförmig abgerundet, um sekundäre Verwirbelungen und Druckverluste zu reduzieren. Dadurch wird verhindert, dass sich hinter dem Drallerzeuger 20 ein instabiler Vakuumbereich bildet, der zyklisch zusammenbricht und dadurch erhebliche Druckschwingungen verursacht. Dies liefert einen wesentlichen Beitrag für ein ruhiges Betriebsverhalten.

Für eine "Rückgewinnung" von kinetischer Energie und deren Umwandlung in Gasdruck ist im Austrittsbereich 10 des Zentrifugalabscheiders 2 ein Drallrichter 57 mit einem Kranz von feststehenden Leitblechen 58 oder Leitschaufeln angeordnet, der ähnlich aufgebaut ist wie der eingangsseitige Kranz von Leitblechen 22, dessen Leitbleche 58 jedoch entgegengesetzt orientiert sind. Damit bewirken die ausgangsseitigen Leitbleche 58 eine Rückwandlung der eingangsseitig erzeugten Drallströmung in eine axiale Strömung und eine Druckerhöhung in der abgehenden, entfeuchteten Gas- oder Dampfströmung. Dem Zweck der Druckerhöhung dient auch der sich in Strömungsrichtung erweiternde Diffusor 60. Für eine verbesserte Strömungsführung ist der Kranz der drallvernichtenden Leitbleche 58 auf einem koaxial zur Achse A ausgerichteten Hohlzylinder 61 angeordnet. Alternativ könnte auch ein geschlossener Zylinder mit strömungsgünstig geformten Stirnseiten vorgesehen sein. Das Profil der Leitbleche 58 ist zweckmäßigerweise für die Druckrückgewinnung optimiert.

Der Zentrifugalabscheider 2 ist für einen horizontalen Einbau - wie in Fig. 1 dargestellt - oder für einen schrägen Einbau besonders geeignet. Prinzipiell sind jedoch beliebige räumliche Orientierungen realisierbar. Dann wäre ggf. die Anbringung der Flüssigkeitsentnahmeleitungen 40 an den Flüssigkeitssammelkammern 38 zu modifizieren, so dass diese weiterhin an der tiefsten Stelle der jeweiligen Kammer liegen. Seine Gesamtlänge beträgt im Ausführungsbeispiel 4,90 m, sein Außendurchmesser 2,0 m. Er ist für einen zulässigen Betriebsdruck von bis zu 15 bar und für eine zulässige Betriebstemperatur von bis zu 200°C ausgelegt. Er wird bevorzugt im Dampfkreislauf einer Kraftwerksturbinenanlage mit einer elektrischen Leistung von beispielsweise 1.400 MW eingesetzt.

Durch die Reduktion der Feuchtigkeit hinter dem Zentrifugalabscheider 2 und dem gegebenenfalls nachgeschalteten Wasserabscheider wird zum einen die mögliche Tropfenerosion an dahinterliegenden Bauteilen (z.B. einem Überhitzerbündel) verringert, zum anderen wird der Anlagenwirkungsgrad durch Reduzierung des Heizdampfverbrauchs und durch Erhöhung der Dampftemperatur begünstigt.

Denkbar wäre es auch, den Zentrifugalabscheider 2 zur Abscheidung von festen Partikeln aus einem Gasstrom einzusetzen. **Der in Fig. 1 und Fig. 2 dargestellte Zentrifugalabscheider dient zur Vor- oder Grobabscheidung von Wassertropfen aus einem Strom von feuchtem Dampf im Wasser-Kreislauf einer Kraftwerksanlage, insbesondere in den Überströmleitungen von einer Hochdruckturbine zu den einer Niederdruckturbine vorgeschalteten Zwischenüberhitzer-Leitungen (hier nicht dargestellt). Zwischen den Zentrifugalabscheider 2 und die Zwischenüberhitzer-Leitungen kann dabei ein Wasserabscheider geschaltet sein, der durch den Zentrifugalabscheider 2 entlastet wird.

Der Zentrifugalabscheider 2 umfasst einen Eintrittsbereich 4 mit einer Eintrittsöffnung 6 für den zu entfeuchtenden Gas- oder Dampfstrom, eine Abscheidestrecke 8, innerhalb derer die Flüssigkeitsabscheidung erfolgt, und einen Austrittsbereich 10 mit einer Austrittsöffnung 12. Zwischen der Eintrittsöffnung 6 und der Austrittsöffnung 12 wird der Gas- oder Dampfstrom in einem Strömungskanal 14 geführt, der nach außen durch ein geeignet konturiertes Innengehäuse 16 begrenzt ist. Der Strömungskanal 14 ist entlang einer Achse A in Axialrichtung 18 ausgerichtet; die Axialrichtung 18 definiert zugleich die Richtung, entlang derer der ursprünglich laminare Gas- oder Dampfstrom in den Eintrittsbereich 4 eintritt. Abgesehen von den noch im Einzelnen zu beschreibenden Flüssigkeitsentnahmeleitungen ist der gesamte Zentrifugalabscheider 2 im Wesentlichen radial symmetrisch zur Achse A aufgebaut (vgl. Fig. 2).

Im Eintrittsbereich 4 ist ein Drallerzeuger 20 mit einer Mehrzahl von in der Art eines Schaufelkranzes von Turbinenleitschaufeln sich von der Achse A radial nach außen erstreckenden, feststehenden profilierten Leitblechen 22 oder Leitschaufeln angeordnet. Im Eintrittsstutzen des Zentrifugalabscheiders 2 wird der axial einströmende Dampf durch die Leitfläche 22 in eine Drallbewegung versetzt. Aufgrund der entstehenden Zentrifugalkraft und deren Verhältnis zu den Gasmolekülen wesentlich größeren Masse der Flüssigkeitstropfen, einhergehend mit einer größeren Trägheit, werden letztere im Bereich der Abscheidestrecke 8 nach außen an die Wand des Innengehäuses 16 geschleudert, wo sie sich als Flüssigkeitsfilm 24 niederschlagen und schließlich über entsprechende Durchtrittsöffnungen 26 im Innengehäuse 16 und einen umliegenden Auffangbehälter nach außen abgeführt werden. Auf diese Weise enthält der aus der Austrittsöffnung 12 austretende Gas- oder Dampfstrom eine geringere Feuchte als der in die Eintrittsöffnung 6 eintretende.

Der Zentrifugalabscheider 2 ist bei einfach gehaltener Bauweise für einen vergleichsweise hohen Abscheidegrad von bis zu 90° oder mehr des im Gas- oder Dampfstrom enthaltenen Flüssigkeitsanteils ausgelegt, wobei zugleich ein besonders ruhiges und vibrationsarmes Betriebsverhalten ermöglicht ist. Dazu sind über die komplette Ausdehnung der Abscheidestrecke 8 hinweg und über den kompletten Umfang des Strömungskanals 14 Durchtrittsöffnungen 26 von vergleichsweise kleinem Durchmesser von z.B. **X mm bis Y mm (Bitte Werte einfügen!)** in die den Strömungskanal 14 umgebende Mantelfläche 28, d.h. in die Wand des Innengehäuses 16, eingebracht. Die Anordnung ist dabei derart regelmäßig gewählt, dass der Abstand zwischen zwei benachbarten Durchtrittsöffnungen 26, bezogen auf deren jeweiligen Mittelpunkt, etwa **X mm bis Y mm (Bitte Werte einfügen!)** beträgt. Insgesamt beträgt das Verhältnis der gesamten Querschnittsfläche aller Durchtrittsöffnungen 26 zur Mantelfläche im Bereich der Abscheidestrecke 8, sprich der Perforationsgrad, beispielsweise 10%. Damit ist gewährleistet, dass die im Strömungskanal 14 nach außen geschleuderten und sich vorübergehend in einem Flüssigkeitsfilm 24 (mit der Grenzschicht 30) anlagernden Flüssigkeitstropfen praktisch über die gesamte Mantelfläche 28 hinweg problemlos durch die vergleichsweise eng beieinander liegenden Durchtrittsöffnungen 26 nach außen hindurchtreten können.

Die Durchtrittsöffnungen 26 den Strömungskanal 14 verlassende Flüssigkeitsmenge wird in einem um den Strömungskanal 14 herum angeordneten Ringraum 32 gesammelt. Nach innen ist der Ringraum 32 durch das Innengehäuse 16 begrenzt; die äußere Begrenzung wird durch ein im Wesentlichen zylindermantelförmiges Außengehäuse 34 gebildet, welches am Anfang und Ende der Abscheidestrecke 8 an das Innengehäuse 16 herangeführt und mit diesem gasdicht verbunden bzw. verschlossen ist. Der Ringraum 32 ist durch ringförmige Trennwände 36, die senkrecht zur Achse A ausgerichtet sind, in voneinander gas- und flüssigkeitsdicht abgetrennte Flüssigkeitssammelkammern 38 unterteilt. Im Ausführungsbeispiel sind vier derartige, jeweils als Ringkammer ausgeführte Flüssigkeitssammelkammern 38 in Axialrichtung 18 hintereinander angeordnet. Zwischen den Flüssigkeitssammelkammern 38 besteht also keine direkte strömungstechnische Verbindung, mithin auch keine Möglichkeit eines Druckausgleichs oder einer Propagation von Druckfluktuationen. Allenfalls besteht eine indirekte Strömungsverbindung über jeweiligen Durchtrittsöffnungen 26 und über das dazwischen liegende Stück des Strömungskanals 14, die aber durch den im Strömungskanal 14 strömenden und einen relativ hohen Staudruck aufweisenden Gas- oder Dampfstrom sowie durch den sich betriebsbedingt einstellenden Flüssigkeitsfilm 24 an der Innenwand des Innengehäuses 16 praktisch blockiert ist. Damit kann die nach außen geschleuderte Flüssigkeit in die Flüssigkeitssammelkammer 38 eintreten, ohne dass darin gegebenenfalls auftretende, vergleichsweise geringfügige Druckfluktuationen sich ausbreiten und gegenseitig in der Art eines Resonanzphänomens verstärken. Dabei ist auch die Bildung von Sekundärwirbeln unterdrückt, die die in der jeweiligen Ringkammer angesammelte Flüssigkeit ansonsten wieder in den Strömungskanal 14 reisen könnten.

An der tiefsten Stelle der jeweiligen Flüssigkeitssammelkammer ist eine Flüssigkeitsentnahmeleitung 40 angeschlossen, um die sich dort sammelnde Flüssigkeit 42 - vorzugsweise alleine durch die Schwerkraft und ohne den Einsatz von Pumpen etc. - abzuführen. An ihrem zweiten Ende münden die Flüssigkeitsentnahmeleitungen 40 jeweils in eine gemeinsame Sammelleitung 40, die wiederum zu einem externen Sammelbehälter (nicht dargestellt) führt oder in geeigneter Weise an einen Flüssigkeitskreislauf angeschlossen ist. Um zu verhindern, dass sich Druckwellen innerhalb einer Flüssigkeitssammelkammer 38 über das Leitungssystem aus Flüssigkeitsentnahmeleitungen 40 und Sammelleitung 44 fortpflanzen, weist die jeweilige Flüssigkeitsentnahmeleitung 40 einen U-förmigen Siphonbogen 46 auf, der durch einen sich dort ansammelnden Flüssigkeitspfropfen 48 gasdicht verschlossen ist. Alternativ können selbstverständlich auch andere bekannte Varianten derartiger im englischsprachigen Raum auch als "Draps" bezeichneten Flüssigkeitsdichtungen zum Einsatz kommen.

Für eine weitere Steigerung der Abscheideeffizienz ist das den Strömungskanal 14 begrenzende Innengehäuse 16 im Bereich der Abscheidestrecke 8 in der Art eines sich verengenden Kegelmantels ausgeführt, wobei das Ende mit dem größeren Durchmesser auf der Eintrittsseite der Gas- oder Dampfströmung liegt und das Ende mit dem kleineren Durchmesser zur Austrittsseite orientiert ist. Durch die Querschnittsverengung des Strömungskanals 14 wird der die Flüssigkeitsabscheidung "antreibende" Drall der Strömung trotz dissipationsbedingter Verluste besonders wirkungsvoll aufrecht erhalten (die Zentrifugalkraft ist umgekehrt proportional zum Radius).

Für eine besonders effektive Strömungsführung und Drallerzeugung ist den Leitblechen 22 des Drallerzeugers 20 strömungsseitig ein im Bereich der zentralen Nabe 50 angeordneter kegelartiger Strömungskörper 52 vorgeschaltet, der eine abgerundete Spitze 56 aufweist. Stromabwärts der Leitbleche 22 ist ein weiterer, zylindrischer Strömungskörper 56 vorgesehen, der sich bis in den Bereich der Abscheidestrecke 8 hinein fortsetzt. Er wirkt als Verdränger für die Drallströmung, die damit gezwungen wird, sich in dem zwischen dem Strömungskörper 56 und dem Innengehäuse 16 liegenden ringförmigen Raumbereich auszubilden. Der in die Abscheidestrecke 8 hineinragende Auslauf des Strömungskörpers ist halbkugelförmig abgerundet, um sekundäre Verwirbelungen und Druckverluste zu reduzieren.

Für eine "Rückgewinnung" von kinetischer Energie und deren Umwandlung in Gasdruck ist im Austrittsbereich 10 des Zentrifugalabscheiders 2 ein Kranz von Leitblechen 50 oder Leitschaufeln angeordnet, der ähnlich aufgebaut ist wie der eingangsseitige Kranz von Leitblechen 22, dessen Leitbleche 58 jedoch entgegengesetzt orientiert sind. Damit bewirken die ausgangsseitigen Leitbleche 58 eine Rückwandlung der eingangsseitig erzeugten Drallströmung in eine axiale Strömung und eine Druckerhöhung in der abgehenden, entfeuchteten Gas- oder Dampfströmung. Dem Zweck der Druckerhöhung dient auch der sich in Strömungsrichtung erweiternde Diffusor 60.

Der Zentrifugalabscheider 2 ist für einen horizontalen Einbau - wie in Fig. 1 dargestellt - oder für einen schrägen Einbau konzipiert. Eine Gesamtlänge beträgt im Ausführungsbeispiel 4,90 m, sein Außendurchmesser 2,0 m. Er ist für einen zulässigen Betriebsdruck von bis zu 15 bar und für eine zulässige Betriebstemperatur von bis zu 200°C ausgelegt. Er wird bevorzugt im Dampfkreislauf einer Kraftwerksturbinenanlage mit einer elektrischen Leistung von beispielsweise 1400 mW eingesetzt.

Durch die Reduktion der Feuchtigkeit hinter dem Zentrifugalabscheider 2 und dem gegebenenfalls nachgeschalteten Wasserabscheider wird zum einen die mögliche Tropfenerosion an dahinter liegenden Bauteilen (z.B. dem Überhitzerbündel) verringert, zum anderen wird der Anlagenwirkungsgrad durch Reduzierung des Heizdampfverbrauchs und durch Erhöhung der Dampftemperatur nach dem Wasserabscheider begünstigt.

### Bezugszeichenliste

- 2: Zentrifugalabscheider
- 4: Eintrittsbereich
- 6: Eintrittsöffnung
- 8: Abscheidestrecke
- 10: Austrittsbereich
- 12: Austrittsöffnung
- 14: Strömungskanal
- 16: Innengehäuse
- 18: Axialrichtung
- 20: Drallerzeuger
- 22: Leitblech
- 24: Flüssigkeitsfilm
- 26: Durchtrittsöffnung
- 28: Mantelfläche
- 30: Grenzschicht
- 32: Ringraum
- 34: Außengehäuse
- 36: Trennwand
- 38: Flüssigkeitssammelkammer
- 40: Flüssigkeitsentnahmeleitung
- 42: Flüssigkeit
- 44: Sammelleitung
- 48: Flüssigkeitspfropfen
- 50: Nabe
- 52: Strömungskörper
- 54: Spitze
- 56: Strömungskörper
- 57: Drallrichter
- 58: Leitblech
- 60: Diffusor
- 61: Hohlzylinder

## Patentansprüche

1. Zentrifugalabscheider (2) zur Abscheidung von Flüssigkeit aus einem mit Flüssigkeit oder Dampf beladenen Gasstrom mit einem von einem feststehenden Innengehäuse (16) begrenzten, entlang einer Axialrichtung (18) ausgerichteten Strömungskanal (14) und mit einer Mehrzahl von im Bereich einer Abscheidestrecke (8) in Axialrichtung (18) hintereinander liegenden, jeweils ringförmig um das Innengehäuse (16) herum angeordneten und jeweils durch Trennwände gegeneinander abgedichteten Flüssigkeitssammelkammern (38), wobei die jeweilige Flüssigkeitssammelkammer (38) über eine Vielzahl von in das Innengehäuse (16) eingebrachten Durchtrittsöffnungen (26) mit dem Strömungskanal (14) in strömungstechnischer Verbindung steht.

2. Zentrifugalabscheider (2) nach Anspruch 1, bei dem die der jeweiligen Flüssigkeitssammelkammer (38) zugeordneten Durchtrittsöffnungen (26) auf der vom Innengehäuse (16) gebildeten Mantelfläche (28) des Strömungskanals (14) zumindest annähernd gleichmäßig verteilt sind.

3. Zentrifugalabscheider (2) nach Anspruch 2, bei dem die Durchtrittsöffnungen (26) über die gesamte Abscheidestrecke (8) hinweg zumindest annähernd gleichmäßig verteilt sind.

4. Zentrifugalabscheider (2) nach einem der Ansprüche 1 bis 3, bei dem das Verhältnis der gesamten Querschnittsfläche aller Durchtrittsöffnungen (26) zur Mantelfläche (28) des Strömungskanals (14) im Bereich der Abscheidestrecke (8) 5% bis 15%, vorzugsweise 10%, beträgt.

5. Zentrifugalabscheider (2) nach einem der Ansprüche 1 bis 4, bei dem die Anzahl der in Axialrichtung (18) hintereinander angeordneten Flüssigkeitssammelkammern 3 bis 5, vorzugsweise 4, beträgt.

6. Zentrifugalabscheider (2) nach einem der Ansprüche 1 bis 5, dessen Strömungskanal (14) sich in Hauptströmungsrichtung des Gasstroms gesehen im Bereich der Abscheidestrecke (8) verengt.

7. Zentrifugalabscheider (2) nach einem der Ansprüche 1 bis 6, bei dem die jeweilige Flüssigkeitssammelkammer (38) als in Umfangsrichtung nicht weiter unterteilte Ringkammer ausgeführt ist.

8. Zentrifugalabscheider (2) nach einem der Ansprüche 1 bis 7, bei dem an die jeweilige Flüssigkeitssammelkammer (38), vorzugweise an deren tiefstliegenden Punkt, eine mit einem Siphonbogen (46) versehende Flüssigkeitsentnahmeleitung (40) angeschlossen ist.

9. Zentrifugalabscheider (2) nach einem der Ansprüche 1 bis 8, dessen Strömungskanal (14) einen der Abscheidestrecke (8) in Strömungsrichtung vorgelagerten Eintrittsbereich (4) und einen der Abscheidestrecke (8) nachgelagerten Austrittsbereich (10) umfasst, wobei im Eintrittsbereich (4) ein Kranz von drallerzeugenden Leitblechen (22) und im Austrittsbereich ein Kranz von drallvernichtenden Leitblechen (58) angeordnet ist.
